# EUROPEAN PATENT SPECIFICATION

(11) **EP 0 525 037 B1**
(45) Date of publication and mention of the grant of the patent: **04.09.1996**
(21) Application number: 91907949.1
(22) Date of filing: 03.04.1991
(51) Int. Cl.: E21B 33/13, C09K 7/02, C04B 24/00, C04B 24/16, C04B 24/26, C04B 24/28

(54) **DISPERSANT COMPOSITIONS FOR SUBTERRANEAN WELL DRILLING AND COMPLETION**
DISPERGIERENDE VERBINDUNGEN ZUR VERWENDUNG BEIM BOHREN UND BEHANDELN VON UNTERIRDISCHEN BOHRLÖCHERN
COMPOSITIONS DE DISPERSANTS UTILISES DANS LE FORAGE ET LA COMPLETION DE PUITS SOUTERRAINS

(30) Priority: 18.04.1990 US 510638
(43) Date of publication of application: 03.02.1993
(73) Proprietor: ATLANTIC RICHFIELD COMPANY, Plano, TX 75075 (US)
(72) Inventor: BLOYS, James, B., Plano, TX 75023 (US); WILSON, William, N., Houston, Texas 77069 (US); MALACHOSKY, Edward, Coppel, TX 75019 (US); CARPENTER, Robert, B., Hurst, TX 76053 (US); BRADSHAW, Roger, D., Allen, TX 75002 (US)
(74) Representative: Cropp, John Anthony David
(86) International application number: US9102278
(87) International publication number: WO9116522

(56) References cited:
- EP-A- 0 138 594
- EP-A- 0 207 536
- EP-A- 0 320 288
- DE-A- 2 830 528
- FR-A- 2 536 758
- FR-A- 2 571 715
- GB-A- 2 032 929
- GB-A- 2 171 127
- US-A- 4 126 009
- US-A- 4 518 510
- US-A- 4 715 971
- US-A- 4 770 795

## Description

### BACKGROUND OF THE INVENTION

### Field of the Invention

The present invention pertains to compositions, and more particularly spacer fluids, cement slurries and mixtures of drilling fluid and cement slurry, for use in the drilling and completion of subterranean wells. The invention also relates to the use of selected polymeric materials as dispersants in such compositions.

### Description of the Prior Art

Techniques are well known for drilling and completing wells, particularly gas and oil wells, which are drilled from the surface of the earth to a subterranean formation containing a fluid mineral which it is desired to recover. After the fluid-containing geologic formation is located by investigation, a borehole is drilled through the overlying layers of the earth's crust to the fluid-containing geologic formation to permit recovery of the fluid mineral contained therein.

The drilling fluids used during drilling of the borehole are generally classified on the basis of their principal component. When the principal ingredient is a liquid (water or oil) the term "mud" is applied to a suspension of solids in the liquid. The most common drilling fluids contain water as the principal component. These drilling fluids are known as water-base drilling fluids or "water muds".

Water-base drilling fluids vary widely in composition and properties and many have been classified based on their principal ingredients. Some common classifications of water-base drilling fluids are freshwater muds, low solid muds, spud muds, salt water muds, lime muds, gyp muds and CL-CLS muds.

In addition to water, drilling fluids often include any number of known additives which perform various functions in the drilling fluid system. Among the most common additives are materials which increase density such as barite and galena and viscosifiers or thickening agents such as clays (usually bentonite).

Furthermore, many water-base drilling fluids are formulated to contain one or more polymeric additives which serve to reduce the rate of filtrate loss, stabilize clays, flocculate drilled solids, increase carrying capacity, emulsify, lubricate and the like. Among the most commonly employed polymeric additives are starches, guar gum, xanthan gum, sodium carboxy-methylcellulose (CMC), hydroxyethylcellulose (HEC), carboxy methyl hydroxyethyl cellulose (CMHEC) and synthetic water dispersable polymers such as acrylics and alkylene-oxide polymers.

Also well known and important for their ability to reduce flow resistance and gel development in clay-water muds are materials which are broadly referred to in the drilling fluid industry as "dispersants". Materials conventionally used as dispersants are classified as plant tannins, polyphosphates, lignitic materials, synthetic water dispersable polymers and lignosulfonates.

When the drilling of the borehole is completed, a casing is secured in position within the borehole to insure permanence of the borehole and to prevent entry into the well of a fluid from a formation other than the formation which is being tapped. The well casing is typically cemented in place by pumping a cement slurry downwardly through the casing. The cement slurry flows out of the open lower end of the casing at the well bottom and then upwardly around the casing in the annular space between the outer wall of the casing and the wall of the well borehole. Frequently, a spacer fluid is pumped downwardly through the casing ahead of the cement slurry to form a buffer between and prevent the contact of the drilling fluid and the cement slurry which are typically in compatible fluids.

The drilling process which produces the borehole will usually leave behind on the wall of the borehole produced, a drilling fluid filter cake of mud-like material. This material is a barrier to the formation of proper bonding by any cement composition employed to produce an impermeable bond between the casing and the well wall.

In an ideal cementing operation the drilling fluid filter cake would be removed from the well bore wall and replaced by the cement slurry to permit the formation of a solid layer of hardened, cured and bonded cement between the casing and the geologic formations through which the well borehole passes. It has been recognized in the art that removal of the drilling fluid filter cake is greatly enhanced by injecting the cement slurry, spacer fluid or the like into the well borehole under turbulent flow conditions.

Inducing turbulence by control of flow velocity alone requires a specific minimum velocity, which in turn is limited by the maximum pressure the wellbore can tolerate. Particularly, where the turbulence induced is sufficient to assure removal of the drilling fluid filter cake, additional pumping capacity and very high pressure levels are usually required. These required pressure levels, especially for deep wells, often exceed the pressure at which the subterranean formations break down, resulting in lost circulation. In addition, the required pressure level may exceed the capacity of the pumping equipment or the endurance of the well drilling and associated apparatus.

The pumping of cement slurries in turbulent flow at lower flow velocities than would be possible using conventional cement slurry compositions, has been accomplished in the prior art by adding to the said cement slurries a flow-property-improving and turbulence-inducing agent, which agent is also known as a dispersant.

In the cementing of oil and gas wells, rather than displacing and removing the drilling fluid during cement slurry placement, it has been proposed to convert the drilling fluid to a cementitious slurry for cementing casing or tubing in place or otherwise stabilizing or protecting the casing by sealing the formation in the vicinity of the borehole.

The conversion of drilling fluid or "mud" to a cement slurry, however, is not without some operational problems and undesirable compositional changes. For example, the addition of cementitious materials such as mixtures of lime, silica and alumina, or lime and magnesia, silica and alumina and iron oxide, or cement materials such as calcium sulphate and Portland cements to aqueous drilling fluids can substantially increase the viscosity of the fluid mixture and result in severe flocculation. Efforts to circulate such mixtures through a wellbore can result in a highly unsatisfactory circulation rate, plugging of the wellbore annulus, breakdown of the earth formation in the vicinity of the wellbore and a failure of the cement slurry to properly mix.

These problems can be overcome by the addition of a dispersant composition which disperses both the drilling fluid and the cement slurry mixture. However, conventional drilling fluid dispersants do not necessarily disperse cement slurries and conventional cement slurry dispersants do not necessarily disperse drilling fluids. In addition, conventional dispersants which do disperse both drilling fluids and cement slurries do not necessarily disperse mixtures of drilling fluids and cement slurries.

It is known in the art that hydroxypropyl acrylate-acrylic acid copolymer, sulfonated vinyl toluene-maleic anhydride copolymer, sulfonated vinyl toluene-maleic acid copolymer, sulfonated methyl, ethyl, or phenyl polyacrylamide, and copolymers of ethylenic acids, acrylamides and ethylenic esters of phosphoric acid, and the sodium salts thereof act as dispersants or deflocculants in drilling fluids.

Dispersant compositions typically exhibit varying properties and performance under different conditions. The performance of dispersant compositions may be evaluated in applications such as, drilling fluid dispersion, mud-to-cement dispersion, cement dispersion, low salt-low hardness mud dispersion, high salt-high hardness mud dispersion and at high temperature in all of the preceding applications.

The present invention has been developed with a view to providing improved dispersant compositions that control rheological properties of, enhance filtrate control in, and disperse one or more of spacer fluids, cement slurries and mixtures of drilling fluids and cement slurries.

US-A-4715971 describes a well drilling and completion fluid containing a homopolymer of hydroxyalkyl acrylate or a copolymer thereof with an acrylic acid or ester or salt thereof, and an accelerator catalyst which may be sulfonated polystyrene or a vinyl sulfonate/vinyl amide copolymer.

EP-A-0138594 proposes poly(acrylic acid) and its salts as a dispersant in drilling muds.

US-A-4770795 proposes sulfoalkyl or sulfophenyl acrylamide polymers and copolymers as deflocculants in high calcium drilling muds.

US-A-4518510 proposes sulphonated vinyl toluene/maleic anhydride copolymers as dispersants in drilling muds.

None of the above publications is concerned with cement or spacer fluids.

US-A-4126009 describes the use of polyethylene oxide and/or polyacrylamide as a thickener-lubricant in a two-component grouting composition for use e.g. in anchoring rock bolts to holes in mine roofs. The purpose of the thickener-lubricant is to reduce the tendency of the particulate aggregate in the water component of the composition to settle or pack.

FR-A-2571715 describes the use of tercopolymers of ethylenic acids, acrylamides and ethylenic esters of phosphoric acid as setting-retardants in hydraulic cement compositions.

DE-A-2830528 describes the use of water soluble anionic polymers containing about 1-60 mol % of anionic structural units and 99 to 40 mol % non-ionic structural units in a cement slurry intended for use in deep wells, to retard setting times and increase water-retention. Specifically mentioned are copolymers of (meth)acrylic acid salts and (meth)acrylamide optionally with other water soluble monomers.

EP-A-0320288 is concerned with the formulation of cement compositions from drilling fluids and describes the use of sulfonated styrene copolymers as dispersants in the compositions.

EP-A-0207536 is concerned with aqueous spacer compositions containing a biopolymer as an anti-settling agent. High molecular weight and low molecular weight anionic polyelectrolytes are proposed for use as fluid loss controlling agents and dispersing agents, respectively; e.g. polystyrenesulfonates, polyvinyltoluenesulfonates and copolymers thereof as fluid loss controlling agents and polyacrylates, lignosulfonates and copolymers thereof with acrylic acid, polystyrenesulfonates, polynaphthalenesulfonates, polyphosphonates, and sulfonated styrene/maleic anhydride copolymers as dispersing agents.

The present invention provides spacer fluids, cement slurries and mixtures of drilling fluids and cement slurries containing dispersant compositions which control rheological properties of and enhance filtrate control in spacer fluids, cement slurries and mixtures of drilling fluids and cement slurries.

According to the present invention, there is provided a fluid composition for use in the drilling and completion of subterranean wells, comprising a mixture of drilling fluid and cement slurry, and a dispersant polymer selected from hydroxypropyl acrylate-acrylic acid copolymers; sulfonated vinyl toluene-maleic anhydride copolymers; sulfonated vinyl toluene-maleic acid copolymers; sulfonated methyl polyacrylamides; sulfonated ethyl polyacrylamides; sulfonated phenyl polyacrylamides; copolymers of ethylenic acids, acrylamides and ethylenic acids of phosphoric acids; sulfonated copolymers of acrylic acid and acrylamide; phosphonated copolymers of acrylic acid and acrylamide; and sulfonated and phosphonated copolymers of acrylic acid and acrylamide.

The invention also provides for the use of a polymer selected from the aforementioned list of polymers as a dispersant for a mixture of drilling fluid and cement slurry.

Further according to the present invention, there is provided a fluid composition for use in the drilling and completion of subterranean wells, comprising a spacer fluid and a dispersant polymer selected from hydroxypropyl acrylate-acrylic acid copolymers; sulfonated vinyl toluene-maleic anhydride copolymers; sulfonated vinyl toluene-maleic acid copolymers; sulfonated methyl polyacrylamides; sulfonated ethyl polyacrylamides; sulfonated phenyl polyacrylamides; copolymers of ethylenic acids, acrylamides and ethylenic acids of phosphoric acids; sulfonated copolymers of acrylic acid and acrylamide; phosphonated copolymers of acrylic acid and acrylamide; and sulfonated and phosphonated copolymers of acrylic acid and acrylamide.

Likewise, the invention also provides for the use of a polymer selected from those just mentioned as a dispersant for a spacer fluid.

In one preferred embodiment, the dispersant polymer of the above-mentioned fluid compositions is selected from copolymers of ethylenic acids, acrylamides and ethylenic esters of phosphoric acid comprising between 0 and 90% of an ethylenic acid residue selected from acrylic acid, methacrylic acid, itaconic acid, crotonic acid, isocrotonic acid, aconitic acid, fumaric acid, mesaconic acid, sinapic acid, undecylenic acid, angelic acid, hydroxyacrylic acid and maleic anhydride; between 2 and 100% of an acrylamide residue selected from acrylamide, methacrylamide and sulphonic-acrylamide-alkyl acids; and between 0 and 90% of a phosphoric acid-ethylenic alcohol ester residue wherein the ethylenic alcohol is a methacrylate or acrylate ester of ethylene glycol, propylene glycol, polyglycol or a mixture thereof.

Still further according to the invention, there is provided a fluid composition for use in the drilling and completion of subterranean wells, comprising a cement slurry and a dispersant polymer selected from hydroxypropyl acrylate-acrylic acid copolymers; sulfonated vinyl toluene maleic anhydride copolymers; sulfonated vinyl toluene-maleic acid copolymers; sulfonated methyl polyacrylamides; sulfonated ethyl polyacrylamides; sulfonated phenyl polyacrylamides; phosphonated copolymers of acrylic acid and acrylamide; and sulfonated and phosphonated copolymers of acrylic acid and acrylamide.

The invention also provides for the use of a polymer selected from those mentioned in the immediately preceding paragraph as a dispersant for a cement slurry.

Those skilled in the art will further appreciate the above-described features of the present invention together with other superior aspects thereof upon reading the detailed description which follows.

### DESCRIPTION OF PREFERRED EMBODIMENTS

The present invention relates to dispersants that control the rheological properties of, enhance filtrate control in and disperse one or more of spacer fluids, cement slurries and mixtures of drilling fluids and cement slurries.

According to the present invention, the molecular weight of the dispersants preferably is in the range of 1,000-15,000, and most preferably, is in the range of 2,000-10,000.

In addition, it is preferred that the dispersants have a high density of anionic charge, because the surface of the particles to be dispersed have some degree of positive charge. It is also preferred that the dispersants include anionic charge supplying functional groups such as sulfonate, phosphonate, phosphate and carboxylate groups.

In mixtures which include drilling fluids, it is preferred that the dispersants contain sulfonate or phosphonate groups when good salt tolerance is desired. It is also preferred that when good salt tolerance is desired, the dispersants include sulfonate or phosphonate groups in conjunction with polar nonionic groups, hydroxyl groups, aliphatic ester groups and alkylene oxide groups. In addition, the more salt tolerant dispersants tend to have fewer carboxylate groups which are more sensitive to divalent ions than are sulfonate or phosphonate groups.

In cement slurries and mixtures of drilling fluids and cement slurries, it is preferred that the dispersants contain a carboxylate group which has a high affinity for the calcium molecules contained in the cement slurry.

The dispersants employed in the compositions of the present invention are selected from hydroxypropyl acrylate-acrylic acid copolymer; sulfonated vinyl toluene-maleic anhydride copolymer; sulfonated vinyl toluene-maleic acid copolymer; sulfonated methyl, ethyl or phenyl polyacrylamide; copolymers of ethylenic acids, acrylamides and ethylenic esters of phosphoric acid; and sulfonated and/or phosphonated copolymers of acrylic acid and acrylamide. The sulfonate, phosphonate, phosphate and carboxylic acid groups on the polymers may be present in neutralized form as alkali metal or ammonium salts.

As noted above, it is known in the art that hydroxypropyl acrylate-acrylic acid copolymer, sulfonated vinyl toluene-maleic anhydride copolymer, sulfonated vinyl toluene-maleic acid copolymer, sulfonated methyl, ethyl or phenyl polyacrylamide, and copolymers of ethylenic acids, acrylamides and ethylenic esters of phosphoric acid, and the sodium salts thereof are dispersants or deflocculants for drilling fluids.

It has been determined according to the present invention that selected ones of the above dispersants for drilling fluids have utility as dispersants for spacer fluids, cement slurries and mixtures of drilling fluids and cement slurries. Specifically, the sodium salts of hydroxypropyl acrylate-acrylic acid copolymers having a molecular weight of approximately 5,000 such as those which are commercially available from the National Starch and Chemical corporation of Bridgewater, New Jersey, under the trade designation Narlex LD-42 (50% solids, aqueous solution) and Narlex D-42 (dry), have been found to be useful as dispersants for spacer fluids, cement slurries and mixtures of drilling fluids and cement slurries.

In addition, sulfonated vinyl toluene-maleic anhydride copolymers and sulfonated vinyl toluene-maleic acid copolymers such as those described in US-A-4,518,510, which copolymers are commercially available from the National Starch and Chemical Corporation of Bridgewater, New Jersey, under the trade designation Narlex D-82 have been found to be useful as dispersants for spacer fluids, cement slurries and mixtures of drilling fluids and cement slurries.

The Narlex D-82 material that is commercially available from the National Starch and Chemical corporation has a molecular weight of 25,000, a molar ratio of vinyl toluene to maleic anhydride or maleic acid of about 1:1 to less than about 2:1, and 0.7 sulfonic acid groups per vinyl toluene group. The 25,000 molecular weight copolymer shows modest activity. It is believed, however, that sulfonated vinyl toluene-maleic anhydride copolymers and sulfonated vinyl toluene-maleic acid copolymers having a molecular weight ranging from 2,000-12,000 would demonstrate superior performance.

Additionally, certain sulfo-alkyl amide or sulfo-arylamide polymers such as those described in US-A-4,762,894 and 4,770,795, which copolymers are commercially available from Nalco Chemical Company of Sugarland, Texas under the trade designation ASP-718 have been found to be useful as dispersants for spacer fluids, cement slurries and mixtures of drilling fluids and cement slurries. The polymers marketed under this trade designation include sulfonated methyl, ethyl or phenyl polyacrylamides.

Moreover, certain copolymers of ethylenic acids, acrylamides and ethylenic esters of phosphoric acid such as those described in US-A-4,782,120, (reference) which copolymers are commercially available from Baroid Drilling Fluids, Inc. of Houston, Texas under the trade designation Therma Thin have been found to be useful as dispersants for spacer fluids and mixtures of drilling fluids and cement slurries. The copolymers marketed under this trade designation include between 0 and 90% of an ethylenic acid residue selected from acrylic acid, methacrylic acid, itaconic acid, crotonic acid, isocrotonic acid, aconitic acid, fumaric acid, mesaconic acid, sinapic acid, undecylenic acid, angelic acid, hydroxyacrylic acid and maleic anhydride; between 2 and 100% of an acrylamide residue selected from acrylamide, methacrylamide and sulphonic-acrylamide-alkyl acids such as sulphonic 2-acrylamide-2-methyl-propane; and between 0 and 90% of a phosphoric acid-ethylenic alcohol ester residue wherein the ethylenic alcohol is selected from methacrylate and acrylate esters of ethylene glycol, propylene glycol, polyglycol and mixtures thereof. The copolymers marketed under this trade designation have a molecular weight of from 500 to 50,000.

Finally, sulfonated sulfonated and/or phosphonated copolymers of acrylic acid and acrylamide are useful as dispersants for spacer fluids, cement slurries and mixtures of drilling fluids and cement slurries.

The water-solubility of the dispersant polymers according to the present invention is influenced by both the molecular weight of the polymer and the presence of sulfonate, phosphonate and phosphate groups on the polymer. As the molecular weight of a polymer increases its water-solubility decreases. As noted above, the polymers have a molecular weight, preferably, in the range of 1,000 to 15,000 and, most preferably, in the range of 2,000 to 10,000. The above molecular weight ranges are before sulfonation, phosphonation or phosphation and, accordingly, do not include the weighting of these groups.

The sulfonate, phosphonate and phosphate groups improve the water solubility of the polymers. When desired, the polymers of the present invention contain a sufficient number of sulfonate, phosphonate or phosphate groups to render the polymer water soluble.

Most polymers of the present invention can be prepared by conventional polymerization techniques that will produce a polymer having the desired characteristics, which techniques are well known to those of ordinary skill in the art. Other polymers such as the sulfo-alkyl amide and sulfo-acrylamide polymers, the copolymers of ethylenic acids, acrylamides and ethylenic esters of phosphoric acid or the sulfonated vinyl toluene-maleic acid copolymers and sulfonated vinyl toluene-maleic anhydride copolymers can be prepared according to the procedures set forth in US-A-4,762,894, 4,782,120 and 4,518,510 respectively.

The sulfonate, phosphonate, phosphate and carboxylic acid groups on the polymers of the present invention preferably are present in neutralized form as alkali metals or ammonium salts.

The dispersants, preferably, are added to spacer fluids, cement slurries and mixtures of drilling fluids and cement slurries, as the case may be, at the rate of between 0.029 and 5.71 g/l (0.1 and 20.0 lbs. per 42-gallon barrel (ppb)) of the original fluid, and preferably between 0.285 and 2.85 g/l (1.0 and 10.0 ppb).

According to the following examples, representative dispersant compositions were tested for their utility in a mud-to-cement dispersion and a cement dispersion. The dispersants were also tested for their utility in a mud-to-cement dispersion at high temperatures.

The rheological parameters indicated in the Examples which follow, including plastic viscosity (PV) indicated in centipoises and yield point (YP) indicated in pounds per hundred feet squared, were measured with a Model 35 Fann viscometer utilizing a #1 bob and sleeve and a #1 spring. A Fann viscometer uses a rotor and a bob which is attached to a spring, to measure the shear stress factor in a fluid. The bob and rotor are immersed in the fluid which is contained in a stationary test cup. The rotor, arranged in concentric alignment with the bob, causes the fluid to move at various shear rates, while the bob by means of the attached spring, measures the torque exerted on itself.

The dispersants of the present invention have utility in spacer fluids, cement slurries and mixtures of drilling fluids and cement slurries.

When added to spacer fluids, the dispersants modify the rheological properties of the fluids and result in fluids having a plastic viscosity of from 0.003 to 0.07 Pas (3 to 70 centipoises), preferably, from 0.005 to 0.05 Pas (5 to 50 centipoises) and a yield point of from 96 to 2394 Pa (2 to 50 lbs/100 ft²), preferably, from 239 to 1436 Pa (5 to 30 lbs/100 ft²).

When added to cement slurries and mixtures of drilling fluids and cement slurries, the dispersants modify the rheological properties of the fluids and result in fluids having a plastic viscosity of from 0.01 to 0.4 Pa (10 to 400 centipoises), preferably, from 0.02 to 0.2 Pa (20 to 200 centipoises) and a yield point of from 0 to 4788 Pa (0 to 100 lbs/100 ft²), preferably, from 239.4 to 2394 Pa (5 to 50 lbs/100 ft²).

### Example 1

Table 1 below shows a performance comparison in a mud-to-cement dispersion at room temperature and at 82°C (180°F) between various polymeric dispersants of the present invention and a sulfonated styrene-maleic anhydride copolymer preparation marketed by Chemlink under the trade designation SSMA 1000. SSMA 1000 has a 1 to 1 ratio of sulfonated styrene to maleic anhydride residues. As disclosed in US-A-4,883,125, SSMA is useful as a dispersant for mixtures of drilling fluids and cement slurries in a mud-to-cement conversion process as it controls the rheological properties of the mixtures. Thus, the performance of the dispersants of the present invention can be evaluated in a mud-to-cement dispersion by comparison to the performance of SSMA in a mud-to-cement dispersion.

**TABLE 1**

| MTC Slurry Components | Mud/Cement Dispersion @ Room Temperature | Mud/Cement Disperson @ 180°F |
|---|---|---|
| 350 cc mud A | | |
| 3.5g. SSMA 1000 | PV=55 | PV=46 |
| 5cc accelerator | YP=31 | YP=24 |
| 300g. "H" cement | | |
| 140 cc water | | |
| | | |
| 350 cc mud A | | |
| 10cc Therma-Thin | PV=67 | PV=87 |
| 5cc accelerator | YP=27 | YP=33 |
| 300g. "H" cement | | |
| 105cc water | | |
| | | |
| 350 cc mud A | | |
| 10g. Narlex D-42 | PV=56 | PV=95 |
| 5cc accelerator | YP=35 | YP=32 |
| 300g. "H" cement | | |
| 105cc water | | |
| | | |
| 350cc mud A | | |
| 10cc ASP-718 | PV=64 | |
| 5cc accelerator | YP=34 | |
| 300g. "H" cement | | |
| 105cc water | | |
| | | |
| 350cc mud B | | |
| 3g. Narlex D-82 | PV=37 | |
| 200g. "H" cement | YP=118 | |
| 35cc water | | |
| Mud A - 60.22% water, 04.42% bentonite, 00.75% Spersene (a chrome lignosulfonate, MI Drilling Fluids, Houston, TX), 00.25% sodium hydroxide, 12.64% Rev Dust (an altered calcium montmorillonite, Milwhite, Houston, TX), 21.73% barite. | | |
| Mud B - 1 bbl H₂O, 15 ppb bentonite, 0.5 ppb Drispac Regular (a polyanionic cellulose, Drilling Specialties Co., Bartlesville, OK), 1.0 ppb Drispac Superlo ( a polyanionic cellulose, Drilling Specialties Co., Bartlesville, OK; Drispac Regular has a higher MW and viscosity in relation to Drispac Superlo), 0.5 ppb Desco CF (a sulfomethylated tannin, Drilling Specialties Co., Bartlesville, OK), 0.5 ppb caustic, 111.3 ppb Rev Dust. | | |

As shown in Table 1 the dispersants according to the present invention show good performance in comparison to SSMA in a mud-to-cement dispersion at room temperature and at 180°F.

### Example 2

Table 2 below shows a performance comparison in a cement dispersion at room temperature between various polymeric dispersants of the present invention, a sulfonated styrene-maleic anhydride copolymer preparation marketed by Chemlink under the trade designation SSMA 1000 and a condensed naphthalene sulfonate (a standard cement dispersant) marketed by Western Co. under the trade designation Western TF-4. As disclosed in US-A-3,952,805 and 4,036,660, SSMA is useful as a dispersant for cement slurries. Thus, the performance of the dispersants according to the present invention can be evaluated in a cement slurry by comparison to the performance of SSMA and Western TF-4 in a cement slurry.

**TABLE 2**

| Cement Slurry Components | Cement Disperson @ Room Temperature |
|---|---|
| 971g. "H" Cement | PV=110 |
| 296g. H₂O | YP=-18 |
| 4.86g. SSMA | |
| | |
| 971g. "H" Cement | PV=104 |
| 296g. H₂O | YP=45 |
| 4.86g. Western TF-4 | |
| | |
| 971g. "H" Cement | PV=161 |
| 296g. H₂O | YP=-32 |
| 4.86g. D-42 | |
| | |
| 971g. "H" Cement | PV=107 |
| 296g. H₂O | YP=-2 |
| 4.86g. D-82 | |
| | |
| 971g. "H" Cement | PV=159 |
| 296g. H₂O | YP=-33 |
| 4.86g. (9.0cc) ASP-718 | |

As shown in Table 2 the dispersants according to the present invention show excellent performance in comparison to SSMA and Western TF-4 in a cement dispersion at room temperature.

## Claims

1. The use as a dispersant for a mixture of drilling fluid and cement slurry of a polymer selected from hydroxypropyl acrylate-acrylic acid copolymers; sulfonated vinyl toluene maleic anhydride copolymers; sulfonated vinyl toluene-maleic acid copolymers; sulfonated methyl polyacrylamides; sulfonated ethyl polyacrylamides; sulfonated phenyl polyacrylamides; copolymers of ethylenic acids, acrylamides and ethylenic esters of phosphoric acid; sulfonated copolymers of acrylic acid and acrylamide; phosphonated copolymers of acrylic acid and acrylamide; and sulfonated and phosphonated copolymers of acrylic acid and acrylamide.

2. The use as a dispersant for a spacer fluid of a polymer selected from hydroxypropyl acrylate-acrylic acid copolymers; sulfonated vinyl toluene maleic anhydride copolymers; sulfonated vinyl toluene-maleic acid copolymers; sulfonated methyl polyacrylamides; sulfonated ethyl polyacrylamides; sulfonated phenyl polyacrylamides; copolymers of ethylenic acids, acrylamides and ethylenic esters of phosphoric acid; sulfonated copolymers of acrylic acid and acrylamide; phosphonated copolymers of acrylic acid and acrylamide; and sulfonated and phosphonated copolymers of acrylic acid and acrylamide.

3. The use as claimed in Claim 1 or Claim 2 characterised in that said polymer is a copolymer of ethylenic acid, acrylamide and ethylenic ester of phosphoric acid comprising between 0 and 90% of an ethylenic acid residue selected from acrylic acid, methacrylic acid, itaconic acid, crotonic acid, isocrotonic acid, aconitic acid, fumaric acid, mesaconic acid, sinapic acid, undecylenic acid, angelic acid, hydroxyacrylic acid and maleic anhydride; between 2 and 100% of an acrylamide residue selected from acrylamide, methacrylamide and sulphonic-acrylamide-alkyl acids; and between 0 and 90% of a phosphoric acid-ethylenic alcohol ester residue wherein the ethylenic alcohol is a methacrylate or acrylate ester of ethylene glycol, propylene glycol, polyglycol or a mixture thereof.

4. The use as a dispersant for a cement slurry of a polymer selected from hydroxypropyl acrylate-acrylic acid copolymers; sulfonated vinyl toluene maleic anhydride copolymers; sulfonated vinyl toluene-maleic acid copolymers; sulfonated methyl polyacrylamides; sulfonated ethyl polyacrylamides; sulfonated phenyl polyacrylamides; phosphonated copolymers of acrylic acid and acrylamide; and sulfonated and phosphonated copolymers of acrylic acid and acrylamide.

5. The use as claimed in any one of Claims 1 to 4 characterised in that at least one of a sulfonate, phosphate, phosphate and carboxylate group on the polymer is present in neutralized form as alkali metal salt or ammonium salt.

6. The use as claimed in any one of Claims 1 to 5, characterised in that said polymer has a molecular weight of from about 1,000 to about 15,000.

7. The use as claimed in any one of Claims 1 to 5, characterised in that said polymer has a molecular weight of from about 2,000 to about 10,000.

8. A fluid composition for use in the drilling and completion of subterranean wells, comprising a mixture of drilling fluid and cement slurry, and a dispersant polymer selected from hydroxypropyl acrylate-acrylic acid copolymers; sulfonated vinyl toluene-maleic anhydride copolymers; sulfonated vinyl toluene-maleic acid copolymers; sulfonated methyl polyacrylamides; sulfonated ethyl polyacrylamides; sulfonated phenyl polyacrylamides; copolymers of ethylenic acids, acrylamides and ethylenic acids of phosphoric acids; sulfonated copolymers of acrylic acid and acrylamide; phosphonated copolymers of acrylic acid and acrylamide; and sulfonated and phosphonated copolymers of acrylic acid and acrylamide.

9. A fluid composition for use in the drilling and completion of subterranean wells, comprising a spacer fluid and a dispersant polymer selected from hydroxypropyl acrylate-acrylic acid copolymers; sulfonated vinyl toluene-maleic anhydride copolymers; sulfonated vinyl toluene-maleic acid copolymers; sulfonated methyl polyacrylamides; sulfonated ethyl polyacrylamides; sulfonated phenyl polyacrylamides; copolymers of ethylenic acids, acrylamides and ethylenic acids of phosphoric acids; sulfonated copolymers of acrylic acid and acrylamide; phosphonated copolymers of acrylic acid and acrylamide; and sulfonated and phosphonated copolymers of acrylic acid and acrylamide.

10. A fluid composition according to Claim 8 or Claim 9 characterised in that said dispersant polymer is selected from copolymers of ethylenic acids, acrylamides and ethylenic esters of phosphoric acid comprising between 0 and 90% of an ethylenic acid residue selected from acrylic acid, methacrylic acid, itaconic acid, crotonic acid, isocrotonic acid, aconitic acid, fumaric acid, mesaconic acid, sinapic acid, undecylenic acid, angelic acid, hydroxyacrylic acid and maleic anhydride; between 2 and 100% of an acrylamide residue selected from acrylamide, methacrylamide and sulphonic-acrylamide-alkyl acids; and between 0 and 90% of a phosphoric acid-ethylenic alcohol ester residue wherein the ethylenic alcohol is a methacrylate or acrylate ester of ethylene glycol, propylene glycol, polyglycol or a mixture thereof.

11. A fluid composition for use in the drilling and completion of subterranean wells, comprising a cement slurry and a dispersant polymer selected from hydroxypropyl acrylate-acrylic acid copolymers; sulfonated vinyl toluene maleic anhydride copolymers; sulfonated vinyl toluene-maleic acid copolymers; sulfonated methyl polyacrylamides; sulfonated ethyl polyacrylamides; sulfonated phenyl polyacrylamides; phosphonated copolymers of acrylic acid and acrylamide; and sulfonated and phosphonated copolymers of acrylic acid and acrylamide.

12. A fluid composition as claimed in any one of Claims 8 to 11 characterised in that at least one of a sulfonate, phosphate, phosphate and carboxylate group on the polymer is present in neutralized form as alkali metal salt or ammonium salt.

13. A fluid composition according to any one of Claims 8 to 12 characterised in that it contains said dispersant in an amount of from 0.029 to 5.71 g/l 0.1 to 20.0 pounds per 42.0 U.S. gallons) of spacer fluid, cement slurry or mixture of drilling fluid and cement slurry.

14. A fluid composition according to any one of Claims 8 to 12 characterised in that it contains said dispersant in an amount of from 0.285 to 2.85 g/l (1.0 to 10.0 pounds per 42.0 U.S. gallons) of spacer fluid, cement slurry or mixture of drilling fluid and cement slurry.

15. A fluid composition as claimed in any one of Claims 8 to 14 characterised in that said polymer has a molecular weight of from about 1,000 to about 15,000.

16. A fluid composition as claimed in any one of Claims 8 to 14 characterised in that said polymer has a molecular weight of from about 2,000 to about 10,000.

## Patentansprüche

1. Verwendung eines Polymers, ausgewählt unter Hydroxypropylacrylat-Acrylsäure-Copolymeren, sulfonierten Vinyltoluol-Maleinsäureanhydrid-Copolymeren, sulfonierten Vinyltoluol-Maleinsäure-Copolymeren, sulfonierten Methylpolyacrylamiden, sulfonierten Ethylpolyacrylamiden, sulfonierten Phenylpolyacrylamiden, Copolymeren von Ethylensäuren, Acrylamiden und Ethylenestern der Phosphorsäure, sulfonierten Copolymeren von Acrylsäure und Acrylamid, phosphonierten Copolymeren von Acrylsäure und Acrylamid, und sulfonierten und phosphonierten Copolymeren von Acrylsäure und Acrylamid, als Dispergiermittel für ein Gemisch aus Bohrflüssigkeit und ZementAufschlämmung.

2. Verwendung eines Polymers, ausgewählt unter Hydroxypropylacrylat-Acrylsäure-Copolymeren, sulfonierten Vinyltoluol-Maleinsäureanhydrid-Copolymeren, sulfonierten Vinyltoluol-Maleinsäure-Copolymeren, sulfonierten Methylpolyacrylamiden, sulfonierten Ethylpolyacrylamiden, sulfonierten Phenylpolyacrylamiden, Copolymeren von Ethylensäuren, Acrylamiden und Ethylenestern von Phosphorsäure, sulfonierten Copolymeren von Acrylsäure und Acrylamid, phosphonierten Copolymeren von Acrylsäure und Acrylamid, und sulfonierten und phosphonierten Copolymeren von Acrylsäure und Acrylamid, als Dispergiermittel für eine Abstandshalter-Flüssigkeit.

3. Verwendung nach Anspruch 1 oder Anspruch 2, dadurch gekennzeichnet, daß das Polymer ein Copolymer von Ethylensäure, Acrylamid und Ethylenester von Phosphorsäure ist, das zwischen 0 und 90 % eines Ethylensäurerests umfaßt, der ausgewählt ist unter Acrylsäure, Methacrylsäure, Itakonsäure, Crotonsäure, Isocrotonsäure, Aconitsäure, Fumarsäure, Mesaconsäure, Sinapinsäure, Undecylensäure, Angelikasäure, Hydroxyacrylsäure und Maleinsäureanhydrid, zwischen 2 und 100% eines Acrylamidrests umfaßt, der ausgewählt ist unter Acrylamid, Methacrylamid und Sulphonacrylamidalkylsäuren, und zwischen 0 und 90 % eines Phosphorsäure-Ethylenalkoholesterrests umfaßt, wobei der Ethylenalkohol ein Methacrylat- oder Acrylatester von Ethylenglycol, Propylenglycol Polyglycol oder ein Gemisch davon ist.

4. Verwendung eines Polymers, ausgewählt unter Hydroxypropylacrylat-Acrylsäure-Copolymeren, sulfonierten Vinyltoluol-Maleinsäureanhydrid-Copolymeren, sulfonierten Vinyltoluol-Maleinsäure-Copolymeren, sulfonierten Methylpolyacrylamiden, sulfonierten Ethylpolyacrylamiden, sulfonierten Phenylpolyacrylamiden, phosphonierten Copolymeren von Acrylsäure und Acrylamid, und sulfonierten und phosphonierten Copolymeren von Acrylsäure und Acrylamid, als Dispergiermittel für eine Zementaufschlämmung.

5. Verwendung nach einem der Ansprüche 1 bis 4, dadurch gekennzeichnet, daß mindestens eine der Sulfonat-, Phosphat, Phosphat und Carboxy-Gruppen an dem Polymer in neutralisierter Form als Alkalimetallsalz oder Ammoniumsalz vorliegt.

6. Verwendung nach einem der Ansprüche 1 bis 5, dadurch gekennzeichnet, daß das Polymer ein Molekulargewicht von etwa 1.000 bis etwa 15.000 besitzt.

7. Verwendung nach einem der Ansprüche 1 bis 5, dadurch gekennzeichnet, daß das Polymer ein Molekulargewicht von etwa 2.000 bis etwa 10.000 besitzt.

8. Fluide Zusammensetzung zur Verwendung beim Bohren und Auffüllen unterirdischer Bohrlöcher, welche ein Gemisch von Bohrflüssigkeit und Zementaufschlämmung umfaßt, und ein Dispergiermittel-Polymer, das ausgewählt ist unter Hydroxypropylacrylat-Acrylsäure-Copolymeren, sulfonierten Vinyltoluol-Maleinsäureanhydrid-Copolymeren, sulfonierten Vinyltoluol-Maleinsäure-Copolymeren, sulfonierten Methylpolyacrylamiden, sulfonierten Ethylpolyacrylamiden, sulfonierten Phenylpolyacrylamiden, Copolymeren von Ethylensäuren, Acrylamiden und Ethylensäuren von Phosphorsäuren, sulfonierten Copolymeren von Acrylsäure und Acrylamid, phosphonierten Copolymeren von Acrylsäure und Acrylamid, und sulfonierten und phosphonierten Copolymeren von Acrylsäure und Acrylamid.

9. Fluide Zusammensetzung zur Verwendung beim Bohren und Auffüllen unterirdischer Bohrlöcher, welche eine Abstandshalter-Flüssigkeit und ein Dispergiermittel-Polymer umfaßt, das ausgewählt ist unter Hydroxypropylacrylat-Acrylsäure-Copolymeren, sulfonierten Vinyltoluol-Maleinsäureanhydrid-Copolymeren, sulfonierten Vinyltoluol-Maleinsäure-Copolymeren, sulfonierten Methylpolyacrylamiden, sulfonierten Ethylpolyacrylamiden, sulfonierten Phenylpolyacrylamiden, Copolymeren von Ethylensäuren, Acrylamiden und Ethylensäuren von Phosphorsäuren, sulfonierten Copolymeren von Acrylsäure und Acrylamid, phosphonierten Copolymeren von Acrylsäure und Acrylamid, und sulfonierten und phosphonierten Copolymeren von Acrylsäure und Acrylamid.

10. Fluide Zusammensetzung nach Anspruch 8 oder Anspruch 9, dadurch gekennzeichnet, daß das Dispergiermittel-Polymer ausgewählt ist unter Copolymeren von Ethylensäuren, Acrylamiden und Ethylenestern von Phosphorsäure, die zwischen 0 und 90 % eines Ethylensäurerests umfassen, der ausgewählt ist unter Acrylsäure, Methacrylsäure, Itakonsäure, Crotonsäure, Isocrotonsäure, Aconitsäure, Fumarsäure, Mesaconsäure, Sinapinsäure, Undecylensäure, Angelikasäure, Hydroxyacrylsäure und Maleinsäureanhydrid, zwischen 2 und 100% eines Acrylamidrests umfassen, der ausgewählt ist unter Acrylamid, Methacrylamid und Sulphonacrylamidalkylsäuren, und zwischen 0 und 90 % eines Phosphorsäure-Ethylenalkoholesterrests umfassen, wobei der Ethylenalkohol ein Methacrylat- oder Acrylatester von Ethylenglycol, Propylenglycol, Polyglycol oder ein Gemisch davon ist.

11. Fluide Zusammensetzung zur Verwendung beim Bohren und Auffüllen unterirdischer Bohrlöcher, welche eine Zementaufschlämmung und ein Dispergiermittel-Polymer umfaßt, das ausgewählt ist unter Hydroxypropylacrylat-Acrylsäure-Copolymeren, sulfonierten Vinyltoluol-Maleinsäureanhydrid-Copolymeren, sulfonierten Vinyltoluol-Maleinsäure-Copolymeren, sulfonierten Methylpolyacrylamiden, sulfonierten Ethylpolyacrylamiden, sulfonierten Phenylpolyacrylamiden, phosphonierten Copolymeren von Acrylsäure und Acrylamid, und sulfonierten und phosphonierten Copolymeren von Acrylsäure und Acrylamid.

12. Fluide Zusammensetzung nach einem der Ansprüche 8 bis 11, dadurch gekennzeichnet, daß mindestens eine Sulfonat- Phosphat-, Phosphat- und Carboxy-Gruppe am Polymer in neutralisierter Form als Alkalimetallsalz oder Ammoniumsalz vorliegt.

13. Fluide Zusammensetzung nach einem der Ansprüche 8 bis 12, dadurch gekennzeichnet, daß sie das Dispergiermittel in einer Menge von 0,029 bis 5,71 g/l (0,1 bis 20,0 Pfund/42,0 US Gallonen) der Abstandshalterflüssigkeit, Zementaufschlämmung oder des Gemisches der Bohrflüssigkeit und Zementaufschlämmung enthält.

14. Fluide Zusammensetzung nach einem der Ansprüche 8 bis 12, dadurch gekennzeichnet, daß sie das Dispergiermittel in einer Menge von 0,285 bis 2,85 g/l (1,0 bis 10,0 Pfund/42,0 US Gallonen) der Abstandshalterflüssigkeit, Zementaufschlämmung oder des Gemisches der Bohrflüssigkeit und Zementaufschlämmung enthält.

15. Fluide Zusammensetzung nach einem der Ansprüche 8 bis 14, dadurch gekennzeichnet, daß das Polymer ein Molekulargewicht von etwa 1.000 bis etwa 15.000 besitzt.

16. Fluide Zusammensetzung nach einem der Ansprüche 8 bis 14, dadurch gekennzeichnet, daß das Polymer ein Molekulargewicht von etwa 2.000 bis etwa 10.000 besitzt.

## Revendications

1. Utilisation en tant que dispersant pour un mélange de fluide de forage et de bouillie de ciment d'un polymère choisi parmi des copolymères d'acrylate d'hydroxypropyle et d'acide acrylique; des copolymères sulfonés de vinyl toluène et d'anhydride maléique; des copolymères sulfonés de vinyl toluène et d'acide maléique; des méthyl polyacrylamides sulfonés; des éthyl polyacrylamides sulfonés; des phényl polyacrylamides sulfonés; des copolymères d'acides éthyléniques, d'acrylamides et d'esters éthyléniques d'acide phosphorique; des copolymères sulfonés d'acide acrylique et d'acrylamide; des copolymères phosphonés d'acide acrylique et d'acrylamide; et des copolymères sulfonés et phosphonés d'acide acrylique et d'acrylamide.

2. Utilisation en tant que dispersant pour un fluide de séparation d'un polymère choisi parmi des copolymères d'acrylate d'hydroxypropyle et d'acide acrylique; des copolymères sulfonés de vinyl toluène et d'anhydride maléique; des copolymères sulfonés de vinyl toluène et d'acide maléique; des méthyl polyacrylamides sulfonés; des éthyl polyacrylamides sulfonés; des phényl polyacrylamides sulfonés; des copolymères d'acides éthyléniques, d'acrylamides et d'esters éthyléniques d'acide phosphorique; des copolymères sulfonés d'acide acrylique et d'acrylamide; des copolymères phosphonés d'acide acrylique et d'acrylamide; et des copolymères sulfonés et phosphonés d'acide acrylique et d'acrylamide.

3. Utilisation suivant les revendications 1 ou 2, caractérisée en ce que ce polymère est un copolymère d'acide éthylénique, d'acrylamide et d'ester éthylénique d'acide phosphorique comprenant entre 0 et 90% d'un résidu d'acide éthylénique choisi parmi l'acide acrylique, l'acide méthacrylique, l'acide itaconique, l'acide crotonique, l'acide isocrotonique, l'acide aconitique, l'acide fumarique, l'acide mésaconique, l'acide sinapique, l'acide undécylénique, l'acide angélique, l'acide hydroxyacrylique et l'anhydride maléique; entre 2 et 100% d'un résidu d'acrylamide choisi parmi l'acrylamide, le méthacrylamide et des acides acrylamide-alkyl sulfoniques; et entre 0 et 90% d'un résidu d'ester d'acide phosphorique et d'alcool éthylénique dans lequel l'alcool éthylénique est un ester méthacrylique ou acrylique d'éthylène glycol, de propylène glycol, de polyglycol ou un mélange de ceux-ci.

4. Utilisation en tant que dispersant pour une bouillie de ciment d'un polymère choisi parmi des copolymères d'acrylate d'hydroxypropyle et d'acide acrylique; des copolymères sulfonés de vinyl toluène et d'anhydride maléique; des copolymères sulfonés de vinyl toluène et d'acide maléique; des méthyl polyacrylamides sulfonés; des éthyl polyacrylamides sulfonés; des phényl polyacrylamides sulfonés; des copolymères phosphonés d'acide acrylique et d'acrylamide; et des copolymères sulfonés et phosphonés d'acide acrylique et d'acrylamide.

5. Utilisation suivant l'une quelconque des revendications 1 à 4, caractérisée en ce qu'au moins un groupe parmi un groupe sulfonate, un groupe phosphate, un groupe phosphonate et un groupe carboxylate sur le polymère est présent sous forme neutralisée en tant que sel de métal alcalin ou que sel d'ammonium.

6. Utilisation suivant l'une quelconque des revendications 1 à 5, caractérisée en ce que ce polymère a un poids moléculaire compris entre environ 1.000 et environ 15.000.

7. Utilisation suivant l'une quelconque des revendications 1 à 5, caractérisée en ce que ce polymère a un poids moléculaire compris entre environ 2.000 et environ 10.000.

8. Composition de fluide utilisable dans le forage et la finition de puits souterrains, comprenant un mélange de fluide de forage et de bouillie de ciment, et un polymère dispersant choisi parmi des copolymères d'acrylate d'hydroxypropyle et d'acide acrylique; des copolymères sulfonés de vinyl toluène et d'anhydride maléique; des copolymères sulfonés de vinyl toluène et d'acide maléique; des méthyl polyacrylamides sulfonés; des éthyl polyacrylamides sulfonés; des phényl polyacrylamides sulfonés; des copolymères d'acides éthyléniques, d'acrylamides et d'esters éthyléniques d'acides phosphoriques; des copolymères sulfonés d'acide acrylique et d'acrylamide; des copolymères phosphonés d'acide acrylique et d'acrylamide; et des copolymères sulfonés et phosphonés d'acide acrylique et d'acrylamide.

9. Composition de fluide utilisable dans le forage et la finition de puits souterrains, comprenant un fluide de séparation et un polymère dispersant choisi parmi des copolymères d'acrylate d'hydroxypropyle et d'acide acrylique; des copolymères sulfonés de vinyl toluène et d'anhydride maléique; des copolymères sulfonés de vinyl toluène et d'acide maléique; des méthyl polyacrylamides sulfonés; des éthyl polyacrylamides sulfonés; des phényl polyacrylamides sulfonés; des copolymères d'acides éthyléniques, d'acrylamides et d'esters éthyléniques d'acides phosphoriques; des copolymères sulfonés d'acide acrylique et d'acrylamide; des copolymères phosphonés d'acide acrylique et d'acrylamide; et des copolymères sulfonés et phosphonés d'acide acrylique et d'acrylamide.

10. Composition de fluide suivant les revendications 8 ou 9, caractérisée en ce que ce polymère dispersant est choisi parmi des copolymères d'acides éthyléniques, d'acrylamides et d'esters éthyléniques d'acide phosphorique comprenant entre 0 et 90% d'un résidu d'acide éthylénique choisi parmi l'acide acrylique, l'acide méthacrylique, l'acide itaconique, l'acide crotonique, l'acide isocrotonique, l'acide aconitique, l'acide fumarique, l'acide mésaconique, l'acide sinapique, l'acide undécylénique, l'acide angélique, l'acide hydroxyacrylique et l'anhydride maléique; entre 2 et 100% d'un résidu d'acrylamide choisi parmi l'acrylamide, le méthacrylamide et des acides acrylamide-alkyl sulfoniques; et entre 0 et 90% d'un résidu d'ester d'acide phosphorique et d'alcool éthylénique dans lequel l'alcool éthylénique est un ester méthacrylique ou acrylique d'éthylène glycol, de propylène glycol, de polyglycol ou un mélange de ceux-ci.

11. Composition de fluide utilisable dans le forage et la finition de puits souterrains, comprenant une bouillie de ciment et un polymère dispersant choisi parmi des copolymères d'acrylate d'hydroxypropyle et d'acide acrylique; des copolymères sulfonés de vinyl toluène et d'anhydride maléique; des copolymères sulfonés de vinyl toluène et d'acide maléique; des méthyl polyacrylamides sulfonés; des éthyl polyacrylamides sulfonés, des phényl polyacrylamides sulfonés; des copolymères phosphonés d'acide acrylique et d'acrylamide et des copolymères sulfonés et phosphonés d'acide acrylique et d'acrylamide.

12. Composition de fluide suivant l'une quelconque des revendications 8 à 11, caractérisée en ce qu'au moins un groupe parmi un groupe sulfonate, un groupe phosphate, un groupe phosphonate et un groupe carboxylate sur le polymère est présent sous forme neutralisée en tant que sel de métal alcalin ou que sel d'ammonium.

13. Composition de fluide suivant l'une quelconque des revendications 8 à 12, caractérisée en ce qu'elle contient ce dispersant en une quantité de 0,29 à 57,1 g/l (0,1 à 20,0 pounds par 42,00 gallons US) de fluide de séparation, de bouillie de ciment ou de mélange de fluide de forage et de bouillie de ciment.

14. Composition de fluide suivant l'une quelconque des revendications 8 à 12, caractérisée en ce qu'elle contient ce dispersant en une quantité de 2,85 à 28,5 g/l (1,0 à 10,0 pounds par 42,00 gallons US) de fluide de séparation, de bouillie de ciment ou de mélange de fluide de forage et de bouillie de ciment.

15. Composition de fluide suivant l'une quelconque des revendications 8 à 14, caractérisée en ce que ce polymère a un poids moléculaire compris entre environ 1.000 et environ 15.000.

16. Composition de fluide suivant l'une quelconque des revendications 8 à 14, caractérisée en ce que ce polymère a un poids moléculaire compris entre environ 2.000 et environ 10.000.
